Europäisches Patentamt

European Patent Office

Office européen des brevets

(19)

(11) Publication number: **0 273 563 B1**

(12) **EUROPEAN PATENT SPECIFICATION**

(45) Date of publication of patent specification: **29.05.91**  (51) Int. Cl.⁵: **F04D 25/14, F16K 17/04, F16B 21/07**

(21) Application number: **87310033.3**

(22) Date of filing: **13.11.87**

(54) Latch for ventilator shutter plate.

(30) Priority: **13.11.86 GB 8627111**

(43) Date of publication of application:
**06.07.88 Bulletin 88/27**

(45) Publication of the grant of the patent:
**29.05.91 Bulletin 91/22**

(84) Designated Contracting States:
**AT BE CH DE FR GB IT LI LU NL SE**

(56) References cited:
**GB-A- 919 794**
**GB-A- 1 437 646**
**US-A- 2 420 061**
**US-A- 2 551 004**

(73) Proprietor: **COLT INTERNATIONAL HOLDINGS A.G.**
**Alpenstrasse 14**
**CH-6300 Zug(CH)BE CH DE FR IT LI LU NL SE AT**

Proprietor: **COLT INTERNATIONAL LIMITED**
**New Lane**
**Havant Hampshire PO9 2LY(GB)GB**

(72) Inventor: **Wheeler, John**
**60 Winter Road Southsea**
**Portsmouth Hampshire T04 9BU(GB)**
Inventor: **Burtenshaw, Raymond Alfred Frank**
**11 South Lane, Clanfield**
**Hampshire(GB)**

(74) Representative: **Slight, Geoffrey Charles et al**
**Graham Watt & Co. Riverhead**
**Sevenoaks Kent TN13 2BN(GB)**

## Description

The present invention relates to ventilators and is concerned with powered, direct discharge ventilators, that is to say, ventilators which do not have a weathering cowl. In such a ventilator a self-weathering, non-return shutter means is employed to close the exit from the extraction fan duct of the ventilator when the ventilator fan is not operating and thereby prevent weather entry through the ventilator and draught entering the building, as well as conserving the heat in the building.

The non-return shutter means in known ventilators of the kind described above takes various forms but essentially, it is automatic in the sense that it is opened by the forced draught of the extraction fan and closed under the action of gravity, possibly assisted by spring action, when the extraction fan is stopped.

In order to shelter the non-return shutter means from wind movement, a surrounding tubular windshield has been provided to enclose the shutter means when it is in the open condition. Problems can still arise, however, under some conditions of roof mounting in as far as the non-return shutter means tends to open due to the suction effect of wind blowing across the top of the windshield when the extraction fan is stationary and the non-return shutter means is required to be closed.

A conventional windshield hitherto provided has necessarily been somewhat tall. This is, in itself, open to objection for aesthetic reasons insofar as a roof mounted ventilator is, preferably of low height so as not to stand out against the sky. Also, the higher the windshield the higher is the "wind-over" suction effect.

It is known to provide, in a powered roof ventilator of the present kind, a non-return shutter means in the form of a flat disc or plate hinged or guided to float up on the airstream when the fan is started whilst maintaining a position generally parallel to that which it occupies in its fan duct closing position.

The use of such a single, non-return shutter plate in a powered, upward discharge roof ventilator enables the height of the ventilator to be reduced, but means is still required to prevent wind movements of the shutter plate, particularly movements tending to lift the shutter plate from its closed position when the ventilator is not operating.

The object of the present invention is to provide a simple and therefore reliable locking and unlocking arrangement for the shutter plate in its closed Position, which will automatically unlock the plate when the fan motor is started and which will automatically lock the plate when the fan motor is shut down and the shutter plate returns to its closed position.

In GB-A-1 437 646 there is disclosed a powered, direct discharge ventilator comprising an extraction fan having a fan duct and a self weathering, non-return shutter plate for closing the exit from the extraction fan duct when the ventilator fan is not operating, the non-return shutter plate being arranged to be opened by the airstream when the fan is started whilst maintaining a position generally parallel to that which it occupies in its fan duct closing position and to be closed under the action of gravity and/or by spring action when the fan is stopped, wherein the fan mounts a centrifugally operable latch means coincident with the rotational axis of the fan for opening and closing the shutter plate.

Proceeding from the disclosure of GB-A-1 437 646 the present invention is characterized in that the non-return shutter plate carries a catch positioned to be engaged by the latch means when the shutter plate is in its closed position, the latch means engaging the catch to lock the shutter plate closed when the fan is stationary and being centrifugally displaceable to disengage the catch when the fan is operated.

The latch means preferably comprises a plurality of detents mounted for movement radially inwardly and radially outwardly of the catch, the detents being urged radially inwardly e.g. by spring action.

Preferably also, the detents are pivoted for radially inward and radially outward swinging movement.

A specific embodiment of the present invention will now be described in detail by way of example, and not by way of limitation, with reference to the accompanying drawings in which:

Fig. 1 is an exploded, perspective view of a ventilator in accordance with the present invention,

Fig. 2 is a partial view of the ventilator in cross-section,

Fig. 3 is a cross-sectional elevation of the centrifugally operable latch means,

Fig. 4 is a cross-sectional plan of the centrifugal latch means,

Fig. 5 is a view corresponding to Fig. 3 showing a housing part of the centrifugally operable latch means,

Fig. 6 is a view in the direction of arrow 6 in Fig. 5,

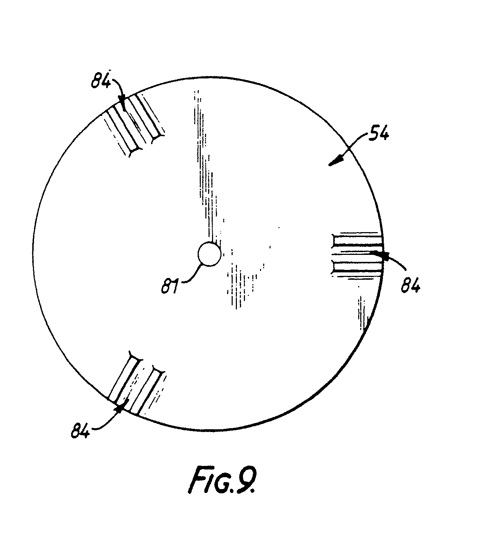

Fig. 7 is a view corresponding to Fig. 3 showing a base part of the centrifugally operable latch means,

Fig. 8 is a view in the direction of arrow 8 in Fig. 7, and

Fig. 9 is an underneath plan view of the centrifugally operated latch means.

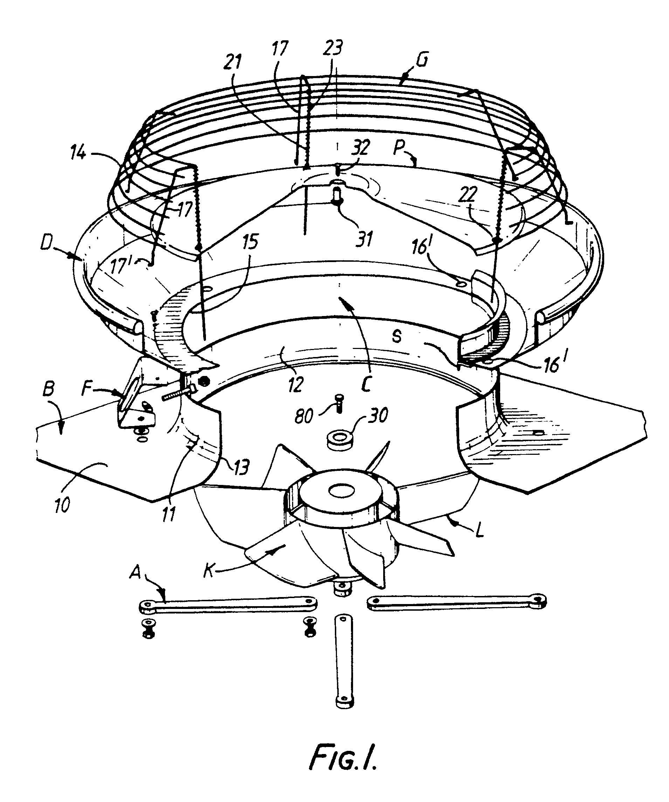

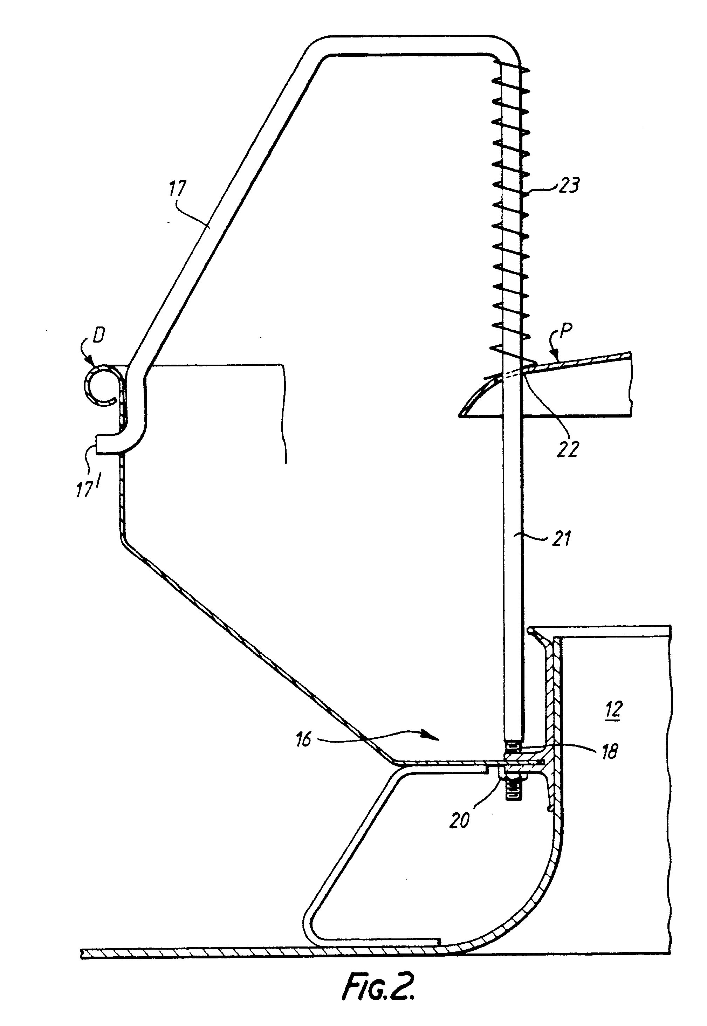

With reference now to the accompanying drawings and first to Figs. 1 and 2, the ventilator there shown is assumed to be mounted on a flat roof with the axis C of rotation of its extraction fan K extending vertically. The ventilator comprises a base B having a square base flange 10 intended to be attached to the roof and a circular upstanding wall 11 defining a ventilation opening or throat 12 forming an extraction fan duct having a bell mouthed entry portion 13. Carried from the base flange 10 by brackets F is a shallow, inverted, frusto-conical dish form member D having a central, circular opening 15 in its floor. An upper edge portion of the wall 11 is received through the opening 15 with a small clearance sealed by an elastomeric seal S which acts also as a draught seal for the non-return shutter yet to be described. The wall 11 penetrates upwardly into the dish-form member D to form a rain water collection channel 16 from which rain water is drained through holes 16' onto the outside of the roof.

The fan K is carried by radial arms A bolted to the base B by the same nuts and bolts as are used to secure the brackets F to the base B, the inner radial ends of the arms A being fixed to the fan motor casing. The fan impeller L is of the axial flow type and runs with a minimum clearance in an upper, cylindrical portion of the duct 12 of the ventilator.

When the fan is operated, the upwardly discharging stream of air generated through the duct 12 of the ventilator prevents the entry of rain into the duct 12 of the ventilator and therefore into the building.

To prevent the entry of rain through the duct 12 into the building, and the downdraught of air into the building, when the fan is not operating as well as for conserving heat in the building when the fan is not operating, a self weathering non-return shutter P is provided to close the exit from the extraction fan duct 12.

The non-return shutter P is of circular outline and is formed by a single disc or plate of shallow inverted-dish construction which rests on a draught seal portion of the seal S surrounding the upper edge portion of the wall 11 such that the non-return shutter P is closely spaced above the top edge of the wall 11 and covers over and closes the opening defined by the wall 11 when the non-return shutter P is in its closed position. In this closed position, the non-return shutter P shelters the extraction fan duct 12 from the entry of rain and snow and the slope of the upper surface of the non-return shutter P drains rain water over the upper edge of the wall 11 into the rain water collection channel 16 from where it drains onto the outside of the roof through the holes 16'.

A wire bird-guard or grid G is mounted on top of the member D. The grid is composed of an array of horizontally disposed circular wire hoops 14 of progressively smaller diameter held in vertically spaced apart relationship with respect to one another by upwardly extending interconnecting spring wires 17 having cranked lower end portions 17' sprung through individual holes in the wall of the dish-form member D and upper end portions which extend first inwardly over the dish form member D and then vertically downwardly to connect by means of screw threaded connections 18, 20 with the floor of the member D.

The vertically downwardly extending portions 21 of the wires 17 act as guides for non-return shutter P. Thus the portions 21 pass through holes 22 in the non-return shutter P and carry compression springs 23 loaded to urge the non-return shutter P downwardly into its closed position as described above.

The member D acts as a windshield to shelter the non-return shutter P against the action of wind to some extent when the non-return shutter is closed, the member D being nevertheless of an acceptably low height to meet aesthetic requirements. However, the member D by itself is not capable of preventing unwanted opening of the non-return shutter P under all wind conditions. To prevent this, the fan K mounts a centrifugally operable latch means 30 coincident with the rotational axis C of the fan and the non-return shutter P carries a catch 31 positioned to be engaged by the latch means 30 when the non-return shutter P is in its closed position, the latch means 30 engaging the catch 31 to lock the non-return shutter P closed when the fan K is stationary and being centrifugally displaceable to disengage the catch 31 when the fan is operated.

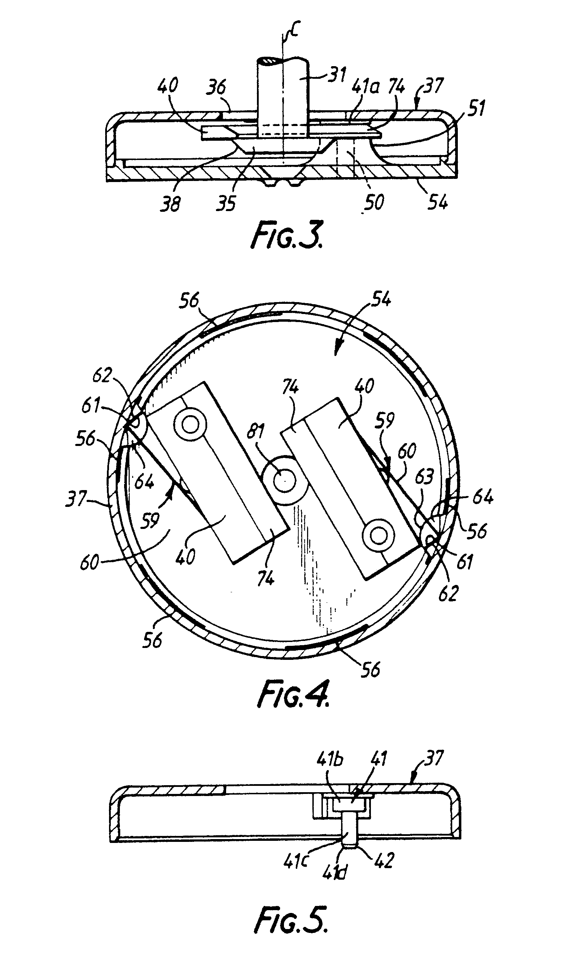

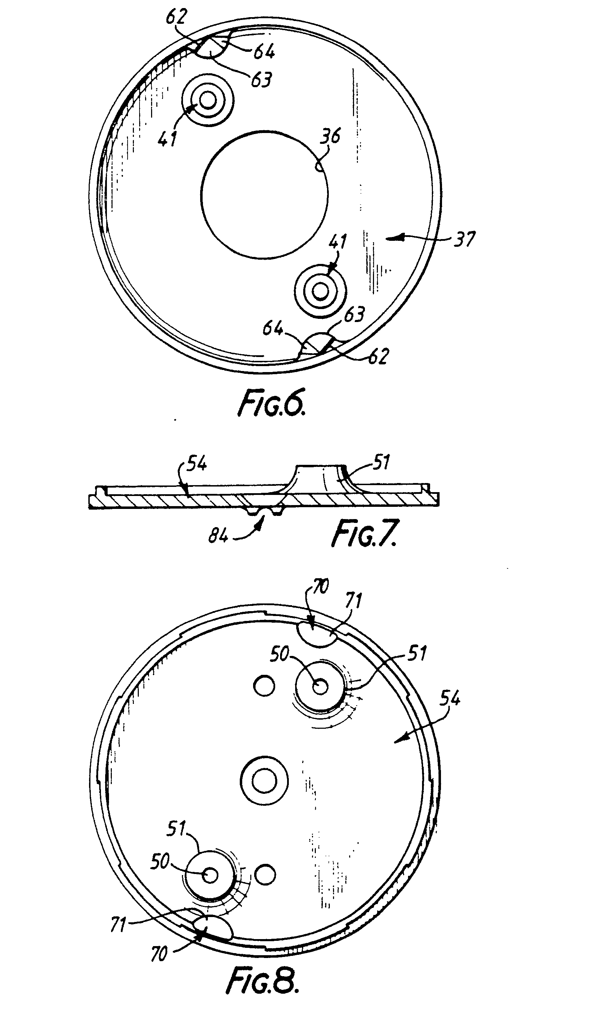

The catch 31 is in the form of a headed pin which is fixed by a screw fastener 32 to the underside of the non-return shutter so as to extend with its shank along the axis C. The head 35 (see Fig. 3) of the catch pin 31 enters a centrally disposed circular hole 36 in an upper end wall of a cylindrical housing portion 37 of the latch means as the non-return shutter P is urged to its closed position upon shut-down of the fan K. The head 35 is in the form of a disc having a chamfered, downwardly facing edge 38 chamfered at an angle of 45°. The latch means 30 comprises a pair of generally rectangular shaped detents 40 pivotally mounted for radial inward and radial outward swinging movement each on a downwardly directed pivot pin 41 carried by the housing portion 37 at a position radially spaced from the axis C. Each pivot pin 41 is of stepped configuration with steps of reducing diameter, proceeding downwardly, the uppermost step 41a presenting an annular, downwardly directed thrust bearing surface for the detent 40, the next step 41b presenting an outer cylindrical pivot surface for the detent 40 and the two subsequent steps 41c and 41d being fitted ultrasonically welded as at 42 (see Fig. 5) in a blind bore 50 in a flat topped, circular sectioned boss 51 formed on a generally disc-shaped base portion 54 of the latch means. The flat top of the boss 51 forms an upwardly directed thrust bearing surface for the detent 40. The detents 40 extend in opposite directions, inwardly of the housing formed by the housing and base portions 37 and 54 respectively and lie generally parallel to one another and to a diameter of the housing. The housing and base portions 37 and 54 of the housing are ultrasonically welded together as at 56 (see Fig. 4). The detents 40 are spring pressed towards the axis C by cantilevered spring arms 60 of generally L shaped springs 59 the other arms 61 of which are received in slots 62 (see Figs. 4 and 6) in spring mounting blocks 63 formed integrally with the housing portion 37, the slots 62 intersecting with segment-shaped recesses 64 in the blocks 63 for the spring arms 60. The springs 59 urge the detents 40 inwardly of the housing towards a locking position seen in Fig. 4 in which they normally engage behind the head 35 of the catch pin 31 and against the shank of the catch pin to lock the non-return shutter P in its closed position. In order to hold the springs 59 in place in the blocks 63, the base portion 54 is formed with corresponding blocks 70, without slits or recesses, which blocks 70 abut the blocks 63. The blocks 70 have upwardly facing bearing surfaces 71 which engage the lower edges of the spring arms 60, 61 to support the springs 59.

Upon start up of the fan K the detents 40 swing outwardly under the action of centrifugal force and, at a predetermined speed, the detents clear the head 35 of the catch pin 31 and the non-return shutter P is lifted by the stream of air discharging from the fan K against the action of the non-return shutter return springs 23, the non-return shutter plate sliding up the guide wire portions 21 which maintain the non-return shutter generally horizontal and parallel to its closed position.

When the fan is shut down, the detents 40 are returned to their locking positions shown in Fig. 4 by the springs 59, as the fan impeller slows. The action of the springs 23 is to return the non-return shutter to its closed position but the discharging air holds the non-return shutter open until the fan impeller slows almost to a standstill. The detents are formed with inner, upwardly facing chamfered edges 74, chamfered at 45°. These are finally engaged by the downwardly facing chamfered edge 38 of the catch pin and the catch forces the detents apart and latches into its locking position underlying the detents 40 as seen in Fig. 3. Thus, the springs 23 overcome the springs 59 to move the non-return shutter to its closed position and the springs 59 then return the detents to their locking position.

The latch means as described is formed in six pieces which are readily manufactured by moulding or casting techniques and which are readily assembled in an "upside-down" position. Also, the housing portions are readily welded together at the positions specified, using an ultrasonic welding technique. Thus, the base portion has an upstanding wall circumferentially castellated on its outside surface to provide gaps for the ultrasonic welding material connecting the base portion 37 to the housing portion 54. Likewise, the step 41d of the detent pivot pins 41 provide a gap in the bores 50 for ultrasonic welding material uniting the pivot pins 41 to the base 54.

The latch means 30 is attached to the fan by a single central attachment screw 80 (see Fig. 1) entered through a centrally disposed hole 81 in the base portion 54. The base portion 54 has pairs of ribs 84 (see Fig. 9) on its underside which receive between the ribs of each pair one radially directed formation of the fan impeller, the ribs 84 thus ensuring that the latch means 30 is driven in rotation with the impeller at the impeller speed.

The latch means 30 is symmetrical about the axis of rotation C of the fan to avoid unbalancing the fan motor.

The detents 40 may be replaced by detents which are linearly displaceable radially outwardly in the housing under the action of centrifugal forces and linearly displaceable radially inwardly under the action of restoring forces which may be gravitational forces and/or spring forces.

## Claims

1.  A powered, direct discharge ventilator comprising an extraction fan (K) having a fan duct (12) and a self weathering, non-return shutter plate (P) for closing the exit from the extraction fan duct (12) when the ventilator fan (K) is not operating, the non-return shutter plate (P) being arranged to be opened by the airstream when the fan (K) is started whilst maintaining a position generally parallel to that which it occupies in its fan duct closing position and to be closed under the action of gravity and/or by spring action when the fan (K) is stopped, wherein the fan (K) mounts a centrifugally operable latch means (30) coincident with the rotational axis (C) of the fan characterized in that the non-return shutter plate (P) carries a catch (31) positioned to be engaged by the latch means (30) when the shutter plate (P) is in its closed position, the latch means (30) engaging the catch (31) to lock the shutter plate (P) closed when the fan (K) is stationary and being centrifugally displaceable to disengage the catch (31) when the fan is operated.

2. A ventilator as claimed in claim 1, wherein the nonreturn shutter plate (P) is guided for opening and closing movements on guide rods (21) disposed parallel with the rotational axis (C) of the fan and the guide rods (21) mount coiled compression springs (23) urging the non-return shutter plate (P) into its closed position.

3. A ventilator as claimed in claim 1 or 2, wherein the catch (31) and the latch means (30) present co-operating cam surfaces (38, 74) enabling the catch (31) to displace the latch means (30) when the non-return shutter plate (P) is moved to its closed position.

4. A ventilator as claimed in any preceding claim wherein the latch means (30) comprises a plurality of detents (40) mounted for movement radially inwardly and radially outwardly of the catch (31), the detents (40) being urged radially inwardly by spring and/or gravitational action.

5. A ventilator as claimed in claim 4 wherein the detents (40) are pivoted for radial inward and radial outward swinging movement.

6. A ventilator as claimed in claim 5, wherein the latch means (30) comprises a housing (37, 54) having a base portion (54) mounted on the fan (K) and a housing portion (37) carried by the base portion (54), the housing portion (37) having an end wall portion with a central opening (36) to receive the catch (31) within the housing (37, 54) said end wall portion (37) carrying a pair of said detents (40) pivoted on said end wall portion, the detents (40) extending from their pivots in opposite directions, inwardly of the housing (37, 54) and lying generally parallel with one another and the catch (31) comprises a headed pin (31) and the head (35) of which is received between the detents (40) and the base portion (54) in the engaged position of the catch (31).

7. A ventilator as claimed in claim 6, wherein the detents (40) are chamfered along their adjacent edges (74) on the side thereof facing said opening (36) and the pin head (35) has chamfered edge (38), to engage the chamfered edges (74) of the detents (40) to displace the detents (40) to enable the pin head to take up its engaged position.

## Revendications

1. Dispositif de ventilation motorisé à évacuation directe, comprenant un ventilateur d'extraction (K) ayant un conduit de ventilateur (12) et une plaque (P) formant un couvercle anti-retour d'autoprotection à l'égard du temps extérieur, pour fermer l'orifice de sortie du conduit (12) du ventilateur d'extraction lorsque ce ventilateur (K) n'est pas en service, la plaque (P) formant un couvercle anti-retour étant disposée de manière à être ouverte par le courant d'air, lorsque le ventilateur (K) est mis en marche, tout en conservant une position qui est généralement parallèle à celle qu'elle occupe dans sa position de fermeture du conduit du ventilateur, et à se fermer sous l'action de la gravité et/ou d'un ressort lorsque le ventilateur (K) est arrêté, le ventilateur (K) portant un dispositif de verrouillage (30), pouvant être actionné sous l'effet de la force centrifuge, coïncidant avec l'axe de rotation (C) du ventilateur, caractérisé en ce que la plaque (P) formant couvercle anti-retour porte un organe d'arrêt (31) disposé de manière à venir en prise avec le dispositif de verrouillage (30) lorsque la plaque (P) formant couvercle anti-retour se trouve dans sa position fermée, le dispositif de verrouillage (30) étant en prise avec l'organe d'arrêt (31) de manière à verrouiller la plaque couvercle (P) en position de fermeture lorsque le ventilateur (K) est à l'arrêt et pouvant être déplacé, sous l'action de la force centrifuge, de manière à libérer l'organe d'arrêt (31) lorsque le ventilateur est mis en service.

2. Dispositif de ventilation suivant la revendication 1 caractérisé en ce que la plaque (2) formant couvercle anti-retour est guidée, pendant ses mouvements d'ouverture et de fermeture, sur des tiges de guidage (21) parallèle à l'axe de rotation (C) du ventilateur et sur ces tiges de guidage (21) sont montés des ressorts de compression (23) sollicitant la plaque (P) formant couvercle anti-retour vers sa position fermée.

3. Dispositif de ventilation suivant l'une quelconque des revendications 1 ou 2 caractérisé en ce que l'organe d'arrêt (31) et le dispositif de déverrouillage (30) présentent des surfaces de came (38,74) coopérant entre elles et permettant à l'organe d'arrêt (31) de déplacer le dispositif de verrouillage (30) lorsque la plaque (P) formant couvercle anti-retour est déplacée vers sa position fermée.

4. Dispositif de ventilation suivant l'une quelconque des revendications précédentes caractérisé en ce que le dispositif de verrouillage (30) comprend une pluralité de cliquets (40) montés de manière à pouvoir se déplacer radialement vers l'intérieur et vers l'extérieur de l'organe d'arrêt (31), les cliquets (40) étant sollicités radialement vers l'intérieur sous l'action d'un ressort et/ou de la gravité.

5. Dispositif de ventilation suivant la revendication 4 caractérisé en ce que les cliquets (40) sont montés à pivotement de manière à effectuer un mouvement de basculement radial vers l'intérieur et vers l'extérieur.

6. Dispositif de ventilation suivant la revendication 5 caractérisé en ce que le dispositif de verrouillage (30) comprend un boîtier (37,54) ayant une base (54) montée sur le ventilateur (K) et un couvercle (37) porté par la base (54), le couvercle (37) ayant une paroi frontale percée d'une ouverture centrale (36) pour recevoir l'organe d'arrêt (31) à l'intérieur du boîtier (37,54), cette paroi frontale (37) portant une paire de cliquets (40) montés à pivotement sur cette paroi frontale, les cliquets (40) s'étendant dans des directions opposées, à partir de leurs pivots respectifs, vers l'intérieur du boîtier (37,54) et étant généralement parallèles l'un à l'autre, et en ce que l'organe d'arrêt (31) est constitué par un doigt (31) à tête dont la tête (35) est logée entre les cliquets (40) et la base (34), dans la position accrochée de l'organe d'arrêt (31).

7. Dispositif de ventilation suivant la revendication 6 caractérisé en ce que les cliquets (40) sont chanfreinés le long de leurs bords voisins (74), sur leur face qui est tournée vers l'ouverture (36), et la tête (35) du doigt présente un bord chanfreiné (38) qui est destiné à venir en contact avec les bords chanfreinés (74) des cliquets (40), afin de déplacer ces cliquets (40) et à permettre à la tête du doigt de parvenir à sa position accrochée.

**Ansprüche**

1. Kraftangetriebener Lüfter mit direkter Abströmung, bestehend aus einem Abzuggebläse (K) mit einem Gebläsekanal (12) und einer Wetterselbstschutz-Rückschlag-Abschlußplatte (P) zum Schließen des Ausgangs vom Abzuggebläsekanal (12) bei nicht arbeitendem Lüftergebläse (K), wobei die Rückschlag-Abschlußplatte (P) für ein Öffnen durch den Luftstrom beim Anstellen des Gebläses (K) unter Aufrechterhaltung einer Position, die im allgemeinen parallel zu derjenigen ist, die sie in ihrer Gebläsekanalschließstellung einnimmt, und für ein Schließen unter der Wirkung von Schwerkraft und/oder durch Federwirkung bei einem Anhalten des Gebläses (K) eingerichtet ist und am Gebläse (K) ein fliehkraftbetätigbarer, mit der Drehachse (C) des Gebläses zusammenfallender Schnapper (30) angebracht ist, dadurch gekennzeichnet, daß die Rückschlag-Abschlußplatte (P) ein Sperrorgan (31) in einer Position für einen Eingriff durch den Schnapper (30) bei in ihrer geschlossenen Stellung befindlicher Abschlußplatte (P) trägt und der Schnapper (30) mit dem Sperrorgan (31) zum Verriegeln der geschlossenen Abschlußplatte (P) bei stillstehendem Gebläse (K) in Eingriff steht und durch Fliehkraft für ein Lösen des Eingriffs mit dem Sperrorgan (31) im Betrieb des Gebläses verlagerbar ist.

2. Lüfter nach Anspruch 1, bei dem die Rückschlag-Abschlußplatte (P) für Öffnungs- und Schließbewegungen auf parallel zur Drehachse (C) des Gebläses angeordneten Führungsstangen (21) geführt ist und auf den Führungsstangen (21) Schraubendruckfedern (23) angebracht sind, die die Rückschlag-Abschlußplatte (P) zu ihrer Schließstellung hin beaufschlagen.

3. Lüfter nach Anspruch 1 oder 2, bei dem das Sperrorgan (31) und der Schnapper (30) zusammenwirkende Nockenflächen (38,74) darbieten, die es dem Sperrorgan (31) ermöglichen, den Schnapper (30) zu verlagern, wenn die Rückschlag-Abschlußplatte (P) in ihre Schließstellung bewegt wird.

4. Lüfter nach einem beliebigen vorhergehenden Anspruch, bei dem der Schnapper (30) mehrere Klinken (40) in einer Anbringung für eine Bewegung radial nach innen und radial nach außen zum Sperrorgan (31) umfaßt, wobei die Klinken (40) durch Feder- und/oder Schwerkraftwirkung radial nach innen beaufschlagt werden.

5. Lüfter nach Anspruch 4, bei dem die Klinken (40) für eine Schwingbewegung radial nach innen und radial nach außen schwenkbar sind.

6. Lüfter nach Anspruch 5, bei dem der Schnapper (30) ein Gehäuse (37,54) mit einem am Gebläse (K) angebrachten Basisteil (54) und einem vom Basisteil (54) getragenen Gehäuseteil (37) umfaßt, der Gehäuseteil (37) einen Endwandbereich mit einer mittleren Öffnung (36) zur Aufnahme des Sperrorgans (31) im Gehäuse (37,54) aufweist, der Endwandbereich (37) ein Paar der Klinken (40) schwenkbar auf dem Endwandbereich trägt, die Klinken (40) sich von ihren Drehpunkten in entgegengesetzten Richtungen zum Inneren des Gehäuses (37,54) erstrecken sowie im allgemeinen parallel zueinander liegen und das Sperrorgan (31) einen Kopfbolzen (31) umfaßt, dessen Kopf (35) zwischen den Klinken (40) und dem Basisteil (54) in der Eingriffsstellung des Sperrorgans (31) aufgenommen ist.

7. Lüfter nach Anspruch 6, bei dem die Klinken (40) entlang ihren benachbarten Rändern (74) auf deren der Öffnung (36) zugewandter Seite abgefast sind und der Bolzenkopf (35) einen abgefasten Rand (38) für einen Eingriff mit den abgefasten Rändern (74) der Klinken (40) zur Verlagerung der Klinken (40) aufweist, um dem Bolzenkopf das Einnehmen seiner Eingriffsstellung zu ermöglichen.

FIG.I.

**FIG.2.**

**Fig.3.**

**Fig.4.**

**Fig.5.**

Fig.6.

Fig.7.

Fig.8.

FIG.9.